# EUROPEAN PATENT SPECIFICATION

(11) **EP 4 365 472 B1**
(45) Date of publication and mention of the grant of the patent: **17.09.2025**
(21) Application number: 23206422.0
(22) Date of filing: 27.10.2023
(51) Int. Cl.: F16L 37/14, F16L 37/088, F16L 37/56, F16B 21/16, F16B 21/18

(54) **FLUID PRESSURE DEVICE, AND FLUID PRESSURE DEVICE SET**
FLUIDDRUCKVORRICHTUNG UND FLUIDDRUCKVORRICHTUNGSSATZ
DISPOSITIF DE PRESSION DE FLUIDE ET ENSEMBLE DE DISPOSITIF DE PRESSION DE FLUIDE

(30) Priority: 04.11.2022 JP 2022176979
(43) Date of publication of application: 08.05.2024
(73) Proprietor: SMC Corporation, Tokyo 104-0031 (JP)
(72) Inventor: ITO, Yoshihiko, Ibaraki, 300-2493 (JP)
(74) Representative: Keil & Schaafhausen Patentanwälte PartGmbB

(56) References cited:
- WO-A1-2022/128575
- CN-U- 209 385 877
- DE-U1- 20 011 475
- US-A1- 2020 103 063
- US-A1- 2020 191 310

## Description

### BACKGROUND OF THE INVENTION

### FIELD OF THE INVENTION

The present invention relates to a fluid pressure device, and a fluid pressure device set.

### DESCRIPTION OF THE RELATED ART

JP 2003-269425 A discloses a U-shaped clip (holder) for holding connection between a fluid pressure device main body and a fitting member. The fitting member includes a projecting section formed with an annular groove on its outer periphery. The fluid pressure device main body is formed with a fitting hole which opens to the outer surface and into which the projecting section is fitted, and a clip insertion hole for inserting the clip into the annular groove in a state where the projecting section is fitted into the fitting hole. A fluid flow path is in communication with the fitting hole. The clip is inserted into the annular groove to prevent the projecting section from coming out of the fitting hole.

US 2020/191310 A1 discloses a quick connector assembly comprising a male connector connected to an end part of a hose, a female connector connected to an inlet of a structure, and a locking clip. When the male connector is inserted into the female connector, both connectors are locked by fitting the locking clip through a slit, provided along a rim of the female connector, onto a locking groove of the male connector.

US 2020/103063 A1 discloses a fluidic connection device comprising a female fluidic connector and a male fluidic connector, wherein the female fluidic connector comprises a U-shaped lock. The male connector comprises a cylindrical nozzle comprising an outer annular ridge, wherein the free end of the nozzle facilitates the insertion into an inner housing of the female connector along an axis. The lock comprises a cap and two elastically deformable legs extending from the cap, the pair of elastically deformable legs being configured to cooperate by elastic snap-fitting with the male connector to ensure retention of the male connector in the female connector along the axis.

CN 209 385 877 U discloses a quick connector with a male connector, a female connector and a slide lock. The slide lock secures the male connector in the female connector when the male connector is connected with the female connector. To secure the male connector, flexible locking arms of the slide lock engage with an annular groove of the male connector.

DE 200 11 475 U1 and WO 2022/128575 A1 disclose further fluid connector assemblies with a male and a female connector that are locked by means of a locking clip.

### SUMMARY OF THE INVENTION

In the above-described prior art, in order to maintain the fluid pressure device main body (female connector) and the fitting member (male connector) in a connected state, it is necessary to insert the clip into the annular groove from the clip insertion hole after fitting the projecting section into the fitting hole. That is, two operations are required, which is troublesome.

The present invention has the object of solving the aforementioned problem.

This object is solved by the fluid pressure device according to claim 1 and the fluid pressure device set according to claim 9. Preferred embodiments are evident from the dependent claims.

According to the present invention, when the projecting section is inserted into the fitting hole in a state where the holder is mounted in the slit, the projecting section comes into contact with the inclined surface of the locking protrusion, and the holder main body is elastically deformed so that the pair of arm portions are separated from each other. Subsequently, when the projecting section is further inserted into the fitting hole and when the locking groove is positioned at the locking protrusion, the elastically deformed holder main body returns to its original shape, and the locking protrusion enters the locking groove. As a result, the projecting section is prevented from coming out of the fitting hole by the locking protrusion. In this way, by mounting the holder in the slit of the female connector in advance, the connection between the female connector and the male connector can be held by a single operation of fitting the projection section into the fitting hole. Therefore, the operation is simple.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a perspective view of a fluid pressure device set according to a first embodiment of the present invention;
FIG. 2 is an exploded perspective view of the fluid pressure device set of FIG. 1;
FIG. 3 is a partially omitted perspective view of a female connector of a fluid pressure device of FIG. 2;
FIG. 4A is a transverse cross-sectional view of the female connector of FIG. 2;
FIG. 4B is a longitudinal cross-sectional view taken along line IVB-IVB of FIG. 4A;
FIG. 5A is a perspective view of a holder of FIG. 2;
FIG. 5B is a perspective view of the holder of FIG. 5A viewed from a different direction;
FIG. 6 is a partially omitted transverse cross-sectional view of the fluid pressure device in a state where the holder is mounted in a slit;
FIG. 7 is a longitudinal cross-sectional view taken along line VII-VII of FIG. 6;
FIG. 8A is an explanatory view of a first operation of connecting the female connector and a male connector;
FIG. 8B is an explanatory view of a second operation of connecting the female connector and the male connector;
FIG. 9 is a transverse cross-sectional view taken along line IX-IX of FIG. 8B;
FIG. 10 is an explanatory view of a third operation of connecting the female connector and the male connector;
FIG. 11A is a perspective view of a holder according to a first modification;
FIG. 11B is a perspective view of a holder according to a second modification;
FIG. 12 is a perspective view of a holder according to a third modification;
FIG. 13 is an exploded perspective view of a fluid pressure device set according to a second embodiment of the present invention; and
FIG. 14 is an exploded perspective view of a fluid pressure device set according to a third embodiment of the present invention.

### DETAILED DESCRIPTION OF THE INVENTION

### (First Embodiment)

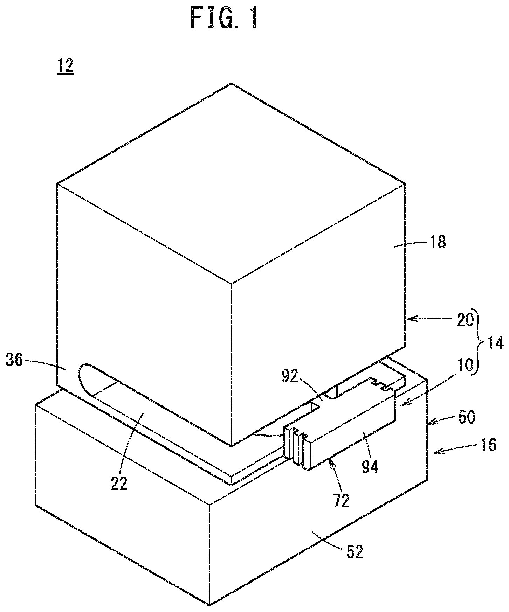

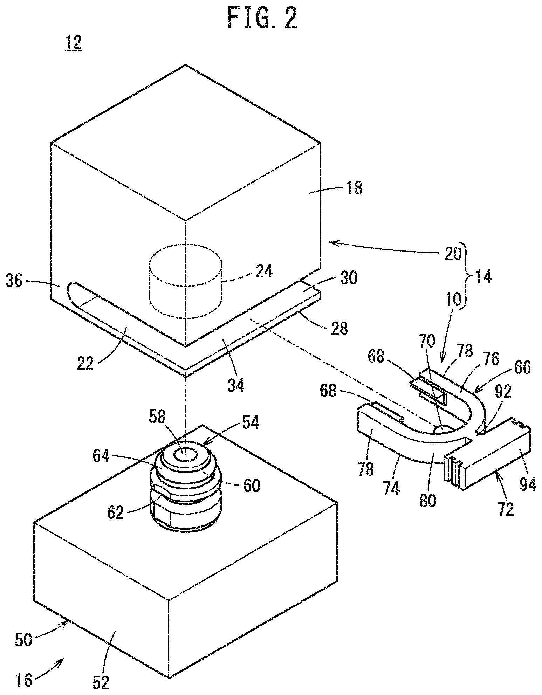

As shown in FIGS. 1 and 2, a fluid pressure device set 12 according to the first embodiment of the present invention includes a fluid pressure device 14, and a connection member 16. The fluid pressure device 14 includes: a device main body 20 including a female connector 18; and a holder 10. The device main body 20 is configured as, for example, an air actuator, a valve member, a tube, a manifold, or the like, but is not limited thereto.

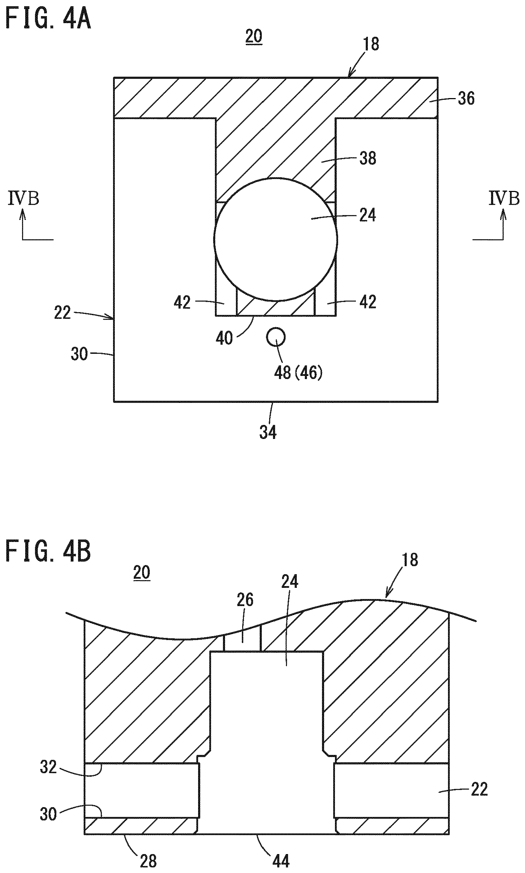

The female connector 18 is formed in a block shape. The female connector 18 is formed in, for example, a rectangular parallelepiped shape. A male connector 50 of the connection member 16 is connected to the female connector 18. In FIGS. 2 to 4B, a slit 22, a fitting hole 24, and a first fluid flow path 26 (fluid flow path) are formed in the female connector 18.

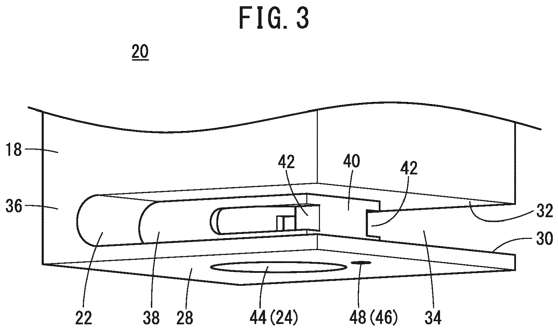

In FIGS. 3 and 4B, the slit 22 is located near an outer surface (a mounting surface 28) of the female connector 18 to which the male connector 50 is connected. The mounting surface 28 is a flat surface. The slit 22 is a narrow groove whose both ends are open. The slit 22 is provided in parallel to the mounting surface 28. An inner surface of the female connector 18 that forms the slit 22 includes a first slit side surface 30 and a second slit side surface 32 facing each other. The first slit side surface 30 is located between the second slit side surface 32 and the mounting surface 28. The slit 22 includes an insertion opening 34 for inserting the holder 10. The holder 10 is mounted in the slit 22 from the insertion opening 34 (see FIGS. 1 and 2).

A support wall portion 38 is provided in the slit 22, the support wall portion 38 extending toward the insertion opening 34 from a wall portion 36 (a bottom wall portion of the slit 22) located on the opposite side from the insertion opening 34. An extended end surface 40 of the support wall portion 38 is located at an intermediate position between the insertion opening 34 and the wall portion 36. An insertion groove 42 is formed in each of both side surfaces of the support wall portion 38. The pair of insertion grooves 42 extend in the extending direction of the support wall portion 38, and open to the extended end surface 40 of the support wall portion 38. The pair of insertion grooves 42 is a part of the slit 22.

The fitting hole 24 passes through the slit 22 in the width direction of the slit 22 (the up-down direction in FIG. 3). The fitting hole 24 passes through the support wall portion 38. The fitting hole 24 includes an opening portion 44 that opens to the mounting surface 28 of the female connector 18 (see FIG. 3). The fitting hole 24 is, for example, a circular hole. In FIG. 4B, the first fluid flow path 26 is in communication with the fitting hole 24. Specifically, the first fluid flow path 26 is connected to a portion of the fitting hole 24 that is located on the opposite side of the slit 22 from the opening portion 44. A fluid such as compressed air flows through the first fluid flow path 26. However, the fluid flowing through the first fluid flow path 26 may be a liquid.

As shown in FIGS. 3 and 4A, the first slit side surface 30 is provided with a first positioning portion 46 for positioning the holder 10. The first positioning portion 46 is a circular recess 48. The recess 48 is a through hole extending from the first slit side surface 30 to the mounting surface 28. The first positioning portion 46 is located between the extended end surface 40 of the support wall portion 38 and the insertion opening 34. The first positioning portion 46 is close to the extended end surface 40 of the support wall portion 38.

As shown in FIG. 2, the connection member 16 is configured as, for example, a fluid pressure device. In this case, the fluid pressure device is configured as, for example, an air actuator, a valve member, a tube, a manifold, or the like, but is not limited thereto. The connection member 16 may be a plug for closing the fitting hole 24.

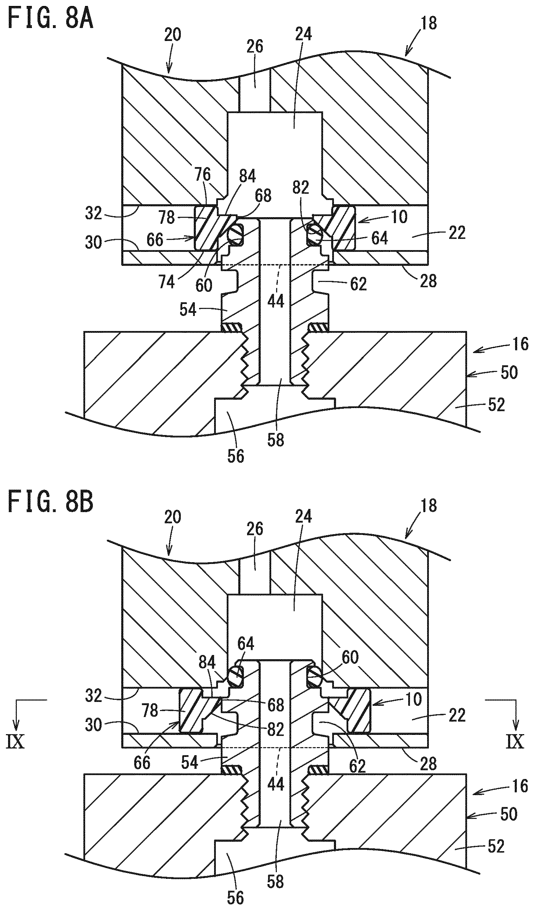

The connection member 16 includes the male connector 50 connectable to the female connector 18. The male connector 50 includes a base section 52 and a projecting section 54. The base section 52 is formed in a block shape. As shown in FIG. 8A, a second fluid flow path 56 through which fluid flows is formed in the base section 52.

The projecting section 54 is provided so as to protrude from the base section 52. The projecting section 54 is a member separate from the base section 52, and is attached to the base section 52. However, the projecting section 54 may be formed integrally with the base section 52. The projecting section 54 is formed in a cylindrical shape. An inner hole 58 of the projecting section 54 is in communication with the second fluid flow path 56 of the base section 52.

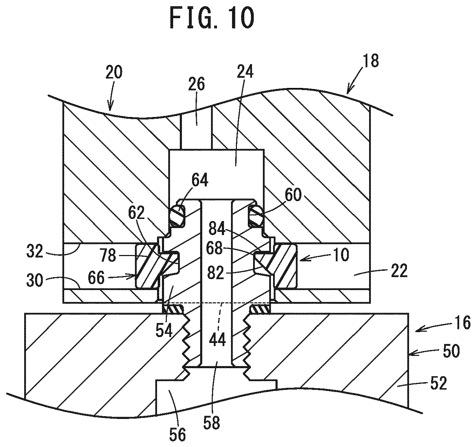

In FIGS. 2 and 8A, a seal holding groove 60 and a locking groove 62 are formed on an outer peripheral surface of the projecting section 54. The seal holding groove 60 extends in an annular shape, and is positioned further in the protruding direction of the projecting section 54 than the locking groove 62. An annular seal member 64 is disposed in the seal holding groove 60. The seal member 64 comes into airtight contact with an inner surface of the fitting hole 24 in a state where the projecting section 54 is fitted into the fitting hole 24 (see FIG. 10).

The locking groove 62 is a groove into which locking protrusions 68 of the holder 10 enter, and extends annularly. In other words, the locking groove 62 extends in a circular ring shape. However, the locking groove 62 may not extend annularly as long as the locking protrusions 68 can enter the locking groove 62. The size, shape, position, and the like of the locking groove 62 can be set as appropriate.

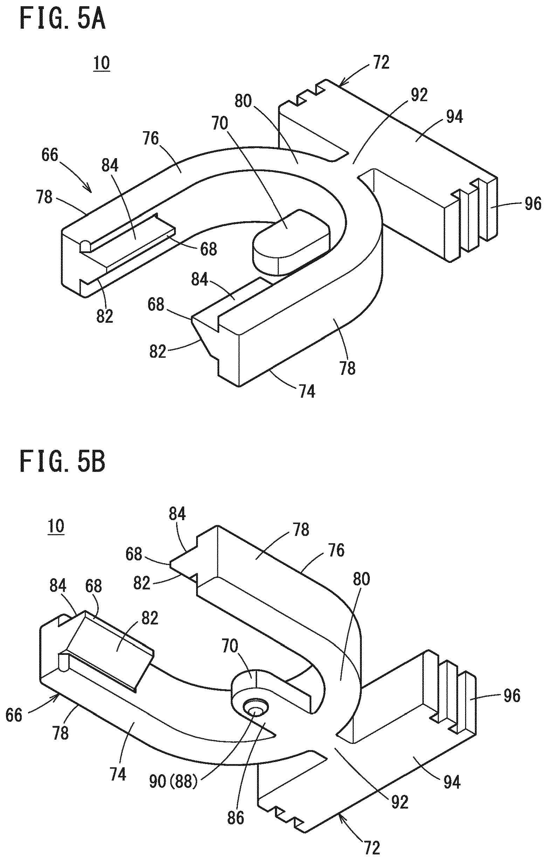

As shown in FIGS. 1 and 2, the holder 10 holds the connection between the female connector 18 and the male connector 50. As shown in FIGS. 5A and 5B, the holder 10 includes a U-shaped holder main body 66, a pair of locking protrusions 68, a positioning base portion 70, and an operation portion 72.

The holder 10 is integrally formed of a resin material. Examples of the resin material constituting the holder 10 include polyacetal (POM) and polybutylene terephthalate (PBT). Polyacetal may be a monopolymer or a copolymer. The flexural modulus of the resin material constituting the holder 10 is preferably equal to or greater than 2500 MPa, for example, but is not limited thereto.

The holder main body 66 has a rectangular transverse cross section. The holder main body 66 includes a first surface 74 and a second surface 76 oriented in the thickness direction. Hereinafter, the direction in which the first surface 74 is oriented (downward in FIG. 5A) may be referred to as a "first direction", and a direction in which the second surface 76 is oriented (upward in FIG. 5A) may be referred to as a "second direction".

In a state where the holder 10 is mounted in the slit 22, the first surface 74 faces the opening portion 44 side, and the second surface 76 faces a side opposite to the opening portion 44 (see, for example, FIG. 8A). The holder main body 66 includes a pair of arm portions 78 extending so as to face each other, and a coupling portion 80 that couples end portions of the pair of arm portions 78 to each other. The pair of arm portions 78 extend parallel to each other. The holder main body 66 is formed so as to be elastically deformable in a direction in which the pair of arm portions 78 are separated from each other. The coupling portion 80 is curved in an arc shape. However, the coupling portion 80 may extend linearly.

The pair of locking protrusions 68 are provided on the pair of arm portions 78, respectively. The pair of locking protrusions 68 protrude inward in the width direction of the holder main body 66 (in a direction in which the pair of arm portions 78 approach each other) from mutually facing inner surfaces of the pair of arm portions 78. The locking protrusions 68 extend in the extending direction of the arm portions 78. The locking protrusions 68 are each provided at a distal end portion of the arm portion 78 (an end portion on the opposite side from the coupling portion 80). The locking protrusions 68 each extend from the distal end portion of the arm portion 78 toward a proximal end portion of the arm portion 78 (an end portion to which the coupling portion 80 is connected).

A surface of each of the locking protrusions 68 that is oriented in the first direction is formed with an inclined surface 82 inclined such that the thickness of the locking protrusion 68 decreases inward in the width direction of the holder main body 66. The inclined surface 82 is a flat surface inclined in the second direction toward the protruding direction of the locking protrusion 68. The inclined surface 82 extends over the entire length of the locking protrusion 68.

A stopper surface 84 is formed on a surface of each of the locking protrusions 68 that is oriented in the second direction. The stopper surface 84 is a flat surface extending in the protruding direction of the locking protrusion 68. The stopper surface 84 extends over the entire length of the locking protrusion 68.

The positioning base portion 70 protrudes from an inner surface of the coupling portion 80 (a surface that connects inner surfaces of the pair of arm portions 78 to each other) toward a space between the pair of arm portions 78. The positioning base portion 70 is located at the center in the extending direction of the coupling portion 80. The positioning base portion 70 is thinner than the holder main body 66. The positioning base portion 70 includes a surface 86 that is continuous and flush with the first surface 74 of the holder main body 66. The surface 86 is provided with a second positioning portion 88.

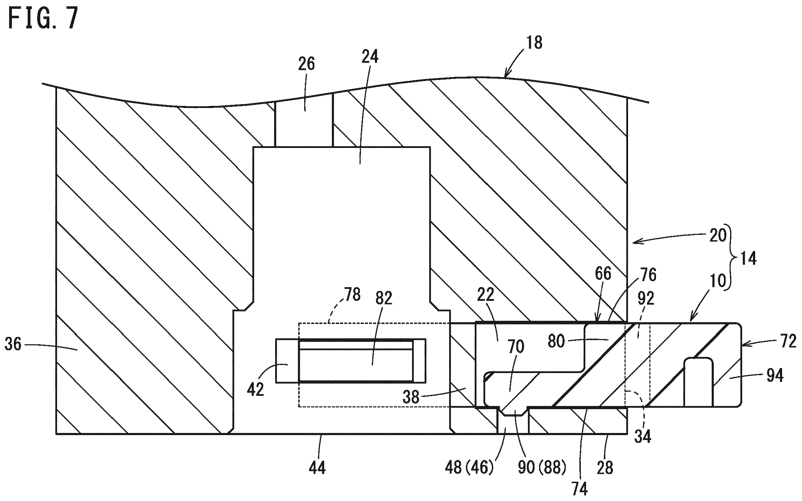

The second positioning portion 88 serves to position the holder 10 with respect to the female connector 18 by engaging with the first positioning portion 46 when the holder 10 is mounted in the slit 22 (see FIG. 7). The second positioning portion 88 is a circular protrusion 90. A distal end portion of the protrusion 90 is reduced in diameter in a tapered shape. As a result, the protrusion 90 can easily enter the recess 48 serving as the first positioning portion 46 (refer to FIG. 7). In the present embodiment, although an example is illustrated in which the first positioning portion 46 is the recess 48 and the second positioning portion 88 is the protrusion 90, but the first positioning portion 46 may be a protrusion and the second positioning portion 88 may be a recess.

The operation portion 72 is formed in such size and shape that a user can hold the operation portion 72 with his/her fingers. The operation portion 72 has the same thickness as the holder main body 66. The operation portion 72 includes a protruding portion 92 protruding outward from an outer surface of the coupling portion 80 on the opposite side from the inner surface thereof, and an operation main body 94 provided at a protruding end of the protruding portion 92. The operation main body 94 extends in the width direction of the holder main body 66. Both end surfaces of the operation main body 94 are provided with non-slip portions 96 having an uneven shape.

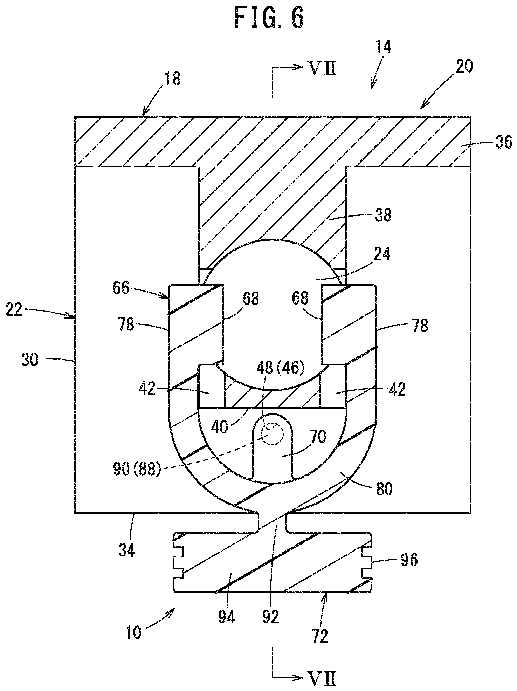

As shown in FIGS. 6 and 7, in the fluid pressure device 14, the holder 10 is mounted in the slit 22 in advance before the female connector 18 and the male connector 50 are connected to each other. Specifically, the holder 10 is inserted into the slit 22 from the insertion opening 34 of the slit 22 such that the first surface 74 of the holder main body 66 faces the first slit side surface 30 (the opening portion 44 side). At this time, the pair of locking protrusions 68 are respectively inserted into the pair of insertion grooves 42 of the support wall portion 38. Subsequently, the second positioning portion 88 (the protrusion 90) engages with (is fitted into) the first positioning portion 46 (the recess 48), whereby the holder 10 is attached to the female connector 18 at an appropriate position. In a state where the holder 10 is mounted in the slit 22, the pair of locking protrusions 68 are positioned at the fitting hole 24.

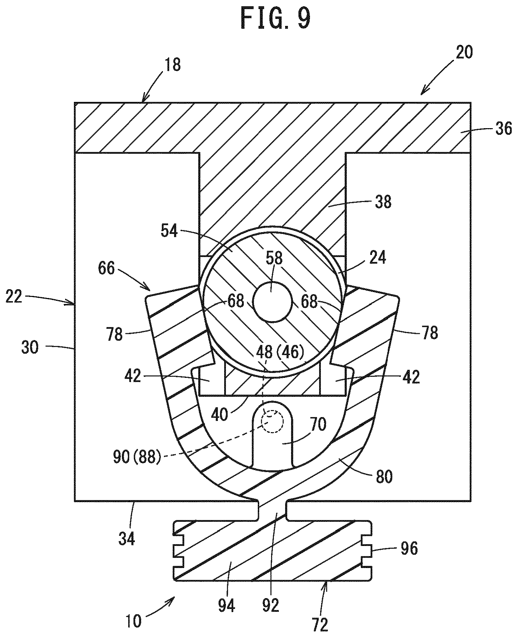

When the female connector 18 and the male connector 50 are connected to each other, as shown in FIG. 8A, the projecting section 54 is inserted into the fitting hole 24 from the opening portion 44 of the mounting surface 28. Then, a distal end portion of the projecting section 54 comes into contact with the pair of inclined surfaces 82. When the projecting section 54 is further inserted into the fitting hole 24, as shown in FIGS. 8B and 9, the protruding portion 92 presses the pair of inclined surfaces 82 in a direction away from each other, whereby the holder main body 66 is elastically deformed and the pair of arm portions 78 are displaced in a direction away from each other. As a result, since the distance between the pair of locking protrusions 68 is increased, the projecting section 54 can be inserted between the pair of locking protrusions 68.

Thereafter, as shown in FIG. 10, when the locking groove 62 of the projecting section 54 is positioned at the pair of locking protrusions 68, the force acting on the locking protrusions 68 from the projecting section 54 is released, whereby the holder main body 66 returns to its original shape and the pair of locking protrusions 68 enter the locking groove 62. Thus, the connection between the female connector 18 and the male connector 50 is completed.

In a state where the female connector 18 and the male connector 50 are connected to each other, the seal member 64 comes into airtight (liquid-tight when the fluid is a liquid) contact with the inner surface of the female connector 18 that forms the fitting hole 24. The first fluid flow path 26 of the female connector 18 communicates with the second fluid flow path 56 of the male connector 50 via the fitting hole 24 and the inner hole 58 of the projecting section 54. Fluid flows between the first fluid flow path 26 and the second fluid flow path 56, whereby a force acts in a direction in which the female connector 18 and the male connector 50 are separated from each other. However, at this time, since the side surface of the locking groove 62 comes into contact with the stopper surfaces 84 of the locking protrusions 68, the projecting section 54 does not come out of the fitting hole 24. That is, according to the present embodiment, with a single operation of inserting the projecting section 54 into the fitting hole 24, the female connector 18 and the male connector 50 are connected to each other and the projecting section 54 is prevented from coming out of the fitting hole 24.

According to the present embodiment, when the projecting section 54 is inserted into the fitting hole 24 in a state where the holder 10 is mounted in the slit 22, the projecting section 54 comes into contact with the inclined surfaces 82 of the locking protrusions 68 and the holder main body 66 is elastically deformed such that the pair of arm portions 78 are separated from each other. Subsequently, when the projecting section 54 is further inserted into the fitting hole 24 and when the locking groove 62 is positioned at the locking protrusions 68, the elastically deformed holder main body 66 returns to its original shape and the locking protrusions 68 enter the locking groove 62. As a result, the projecting section 54 is prevented from coming out of the fitting hole 24 by the locking protrusions 68. In this way, by mounting the holder 10 in the slit 22 of the female connector 18 in advance, the connection between the female connector 18 and the male connector 50 can be held by a single operation of fitting the projecting section 54 into the fitting hole 24. Therefore, the operation is simple.

Next, holders 10A to 10C according to first to third modifications will be described. In these modifications, the same components as those of the above-described holder 10 are denoted by the same reference numerals, and detailed description thereof is omitted.

### (First Modification)

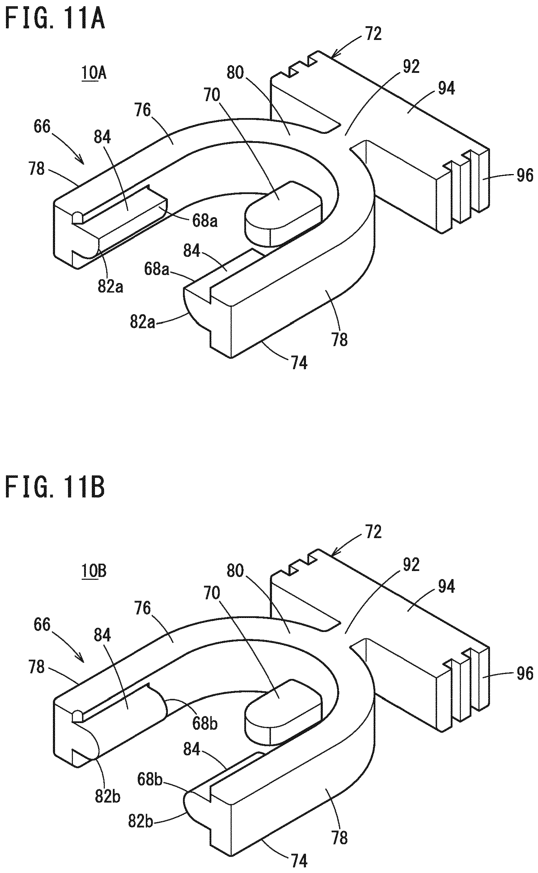

As shown in FIG. 11A, the holder 10A according to the first modification includes a pair of locking protrusions 68a. Inclined surfaces 82a of the locking protrusions 68a are curved in an arc shape so as to be convex in the first direction (downward in FIG. 11A) when viewed from a distal end direction of the arm portions 78. Also with these inclined surfaces 82a, the same effect as that of the above-described inclined surface 82 can be achieved.

### (Second Modification)

As shown in FIG. 11B, the holder 10B according to the second modification includes a pair of locking protrusions 68b. Protruding ends of the locking protrusions 68b are formed in a semi-circular shape when viewed from the distal end direction of the arm portions 78. In this case, inclined surfaces 82b of the locking protrusions 68b are curved in an arc shape so as to be convex in the first direction (downward in FIG. 11B) when viewed from the distal end direction of the arm portions 78. Also with these inclined surfaces 82b, the same effect as that of the above-described inclined surface 82 can be achieved.

### (Third Modification)

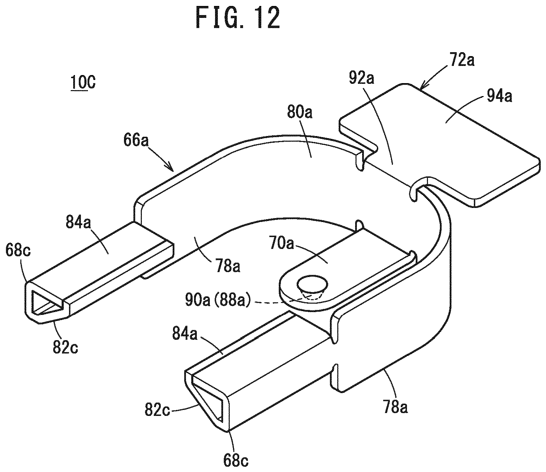

As shown in FIG. 12, the holder 10C according to the third modification is integrally formed of a metal material. Examples of the metal material constituting the holder 10C include, but are not limited to, stainless steels for springs. The holder 10C is formed by, for example, bending a metal sheet into a predetermined shape.

The holder 10C includes a U-shaped holder main body 66a, a pair of locking protrusions 68c, a positioning base portion 70a, and an operation portion 72a. The function of each component of the holder 10C is the same as the function of each component of the holder 10 described above. The holder main body 66a includes a pair of arm portions 78a extending so as to face each other, and a coupling portion 80a that couples end portions of the pair of arm portions 78a to each other.

The pair of locking protrusions 68c are provided at distal end portions of the pair of arm portions 78a, respectively. The locking protrusions 68c each extend from the distal end portion of the arm portion 78a in a distal end direction (a direction away from the coupling portion 80a). The locking protrusions 68c are formed in a triangular tubular shape when viewed from the distal end direction of the arm portions 78a. The locking protrusions 68c protrude inward in the width direction of the holder main body 66a. The locking protrusions 68c each include an inclined surface 82c and a stopper surface 84a.

The inclined surface 82c is a flat surface inclined in the second direction toward the protruding direction of the locking protrusion 68c. However, the inclined surface 82c may be formed in an arc shape when viewed from the distal end direction of the arm portion 78a, similarly to the inclined surface 82a of the holder 10A (refer to FIG. 11A) or the inclined surface 82b of the holder 10B (refer to FIG. 11B) described above. The stopper surface 84a is a flat surface oriented in the second direction.

The positioning base portion 70a protrudes from an end portion of the coupling portion 80a on the first direction side (the lower side in FIG. 12) toward a space between the pair of arm portions 78a. The positioning base portion 70a is provided with a second positioning portion 88a protruding in the first direction. The second positioning portion 88a is a circular protrusion 90a.

The operation portion 72a includes a protruding portion 92a protruding in a direction away from the pair of arm portions 78a from an end portion of the coupling portion 80a on the second direction side (the upper side in FIG. 12), and an operation main body 94a provided at a protruding end of the protruding portion 92a. The operation main body 94a extends in a flat plate shape.

According to such a modification, the holder main body 66a is elastically deformed in a direction in which the pair of arm portions 78a are separated from each other. Therefore, the holder 10C has the same effect as that of the above-described holder 10.

### (Second Embodiment)

Next, a fluid pressure device set 12A according to the second embodiment of the present invention will be described. In the present embodiment, the same components as those of the fluid pressure device set 12 according to the first embodiment described above are denoted by the same reference numerals, and detailed description thereof will be omitted. The same applies to a third embodiment of the present invention, which will be discussed later.

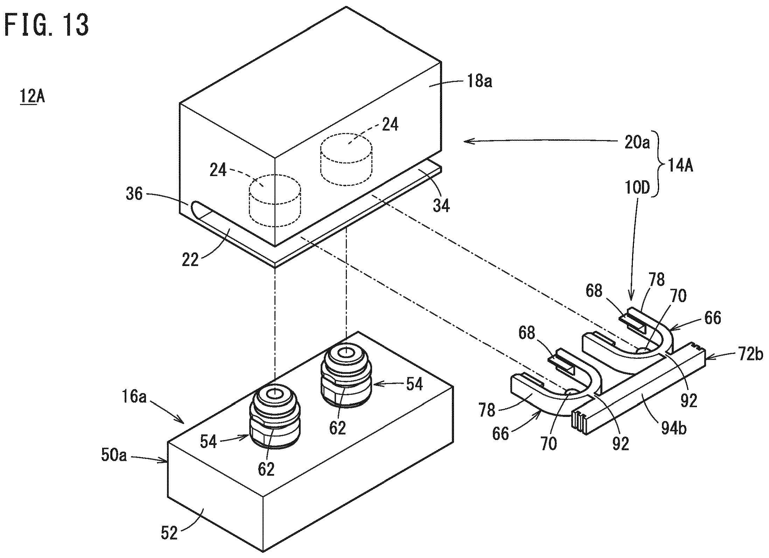

As shown in FIG. 13, the fluid pressure device set 12A according to the second embodiment includes a fluid pressure device 14A and a connection member 16a. The fluid pressure device 14A includes a device main body 20a and a holder 10D. A female connector 18a of the device main body 20a includes two fitting holes 24 into which two projecting sections 54 of a male connector 50a of the connection member 16a are fitted. The two fitting holes 24 are disposed to be spaced apart from each other in the extending direction of the slit 22.

The holder 10D includes two holder main bodies 66 and one operation portion 72b. Each of the holder main bodies 66 is provided with the pair of locking protrusions 68 and the positioning base portion 70. The operation portion 72b includes two protruding portions 92 protruding from the holder main bodies 66, and an operation main body 94b extending so as to connect protruding ends of the protruding portions 92. That is, the two holder main bodies 66 are connected to each other via the operation portion 72b.

In the fluid pressure device set 12A according to the second embodiment, the same configurations as those of the fluid pressure device set 12 according to the first embodiment exhibit the same operational effects.

According to the present embodiment, the plurality of holder main bodies 66 are provided to be spaced apart from each other in the extending direction of the operation portion 72b.

According to such a configuration, even in a case where the plurality of fitting holes 24 are formed in the female connector 18a, and the male connector 50a includes the plurality of projecting sections 54, the connection between the female connector 18a and the male connector 50a can be held by the single holder 10D.

### (Third Embodiment)

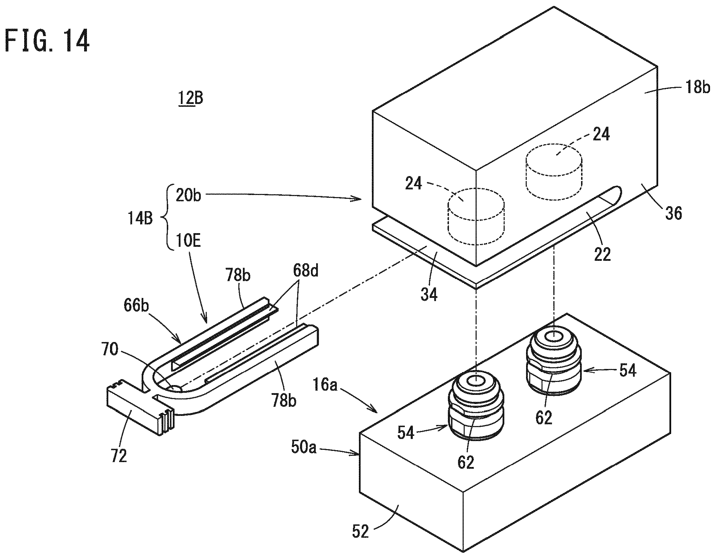

As shown in FIG. 14, a fluid pressure device set 12B according to the third embodiment includes a fluid pressure device 14B and the connection member 16a. The fluid pressure device 14B includes a device main body 20b and a holder 10E. A female connector 18b of the device main body 20b includes two fitting holes 24 into which two projecting sections 54 of the male connector 50a of the connection member 16a are fitted. The two fitting holes 24 are disposed to be spaced apart from each other in the depth direction of the slit 22.

The holder 10E includes a holder main body 66b, a pair of locking protrusions 68d, the positioning base portion 70, and the operation portion 72. A pair of arm portions 78b of the holder main body 66b are formed to be longer than the pair of arm portions 78 of the above-described holder 10. The pair of locking protrusions 68d are formed to be longer than the pair of locking protrusions 68 of the above-described holder 10. The arm portion 78b and the locking protrusion 68d have lengths such that the locking protrusion 68d is positioned at the two fitting holes 24 in a state where the holder 10E is mounted in the slit 22.

In the fluid pressure device set 12B according to the third embodiment, the same configurations as those of the above-described fluid pressure device sets 12 and 12A exhibit the same operational effects.

In each of the holders 10, 10A to 10E described above, the locking protrusions 68, 68a to 68d may be provided on only one of the pair of arm portions 78, 78a, 78b. Further, in each of the holders 10, 10A to 10E, the operation portion 72, 72a, 72b may be omitted. In this case, the holders 10, 10A to 10E may be configured such that the holders 10, 10A to 10E mounted in the slits 22 cannot be removed, or may be configured such that the holders 10, 10A to 10E can be removed from the slits 22 by using special tools or the like.

## Claims

1. A fluid pressure device (14, 14A, 14B), comprising:
a female connector (18, 18a, 18b); and
a holder (10, 10A to 10E) configured to hold connection between the female connector (18, 18a, 18b) and a male connector (50, 50a),
wherein the female connector (18, 18a, 18b) is provided with:
a slit (22) in which the holder (10, 10A to 10E) is mounted;
a fitting hole (24) including an opening portion (44) that opens to an outer surface of the female connector (18, 18a, 18b), the fitting hole (24) passing through the slit (22); and
a fluid flow path (26) communicating with the fitting hole (24), and
the male connector (50, 50a) includes a projecting section (54) configured to be fitted into the fitting hole (24),
the holder (10, 10A to 10E) comprises:
a holder main body (66, 66a, 66b) having a U shape and including a pair of arm portions (78, 78a, 78b) elastically deformable in a direction in which the arm portions (78, 78a, 78b) are separated from each other; and
a locking protrusion (68, 68a to 68d) provided on at least one of the pair of arm portions (78, 78a, 78b) and configured to, in a state where the projecting section (54) is fitted into the fitting hole (24), enter a locking groove (62) formed on an outer periphery of the projecting section (54), thereby preventing the projecting section (54) from coming out of the fitting hole (24),
wherein the locking protrusion (68, 68a to 68d) includes a surface that is oriented toward the opening portion (44) in a state where the holder (10, 10A to 10E) is mounted in the slit (22), and the surface is provided with an inclined surface (82, 82a to 82c) inclined in a manner so that a thickness of the locking protrusion (68, 68a to 68d) decreases inward in a width direction of the holder main body (66, 66a, 66b),
the thickness of the locking protrusion (68, 68a to 68d) is a dimension of the locking protrusion (68, 68a to 68d) in a direction in which the projecting section (54) is fitted into the fitting hole (24) in a state where the holder (10, 10A to 10E) is mounted in the slit (22),
the holder main body (66, 66a, 66b) includes a coupling portion (80, 80a) configured to couple the pair of arm portions (78, 78a, 78b) to each other,
**characterized in that** the coupling portion (80, 80a) includes a positioning base portion (70) protruding from an inner surface of the coupling portion toward a space between the pair of arm portions (78, 78a, 78b),
the positioning base portion (70) includes a second positioning portion (88, 88a) configured to engage with a first positioning portion (46) of the female connector (18, 18a, 18b), and
one of the first positioning portion (46) and the second positioning portion (88, 88a) is a protrusion and the other of the first positioning portion (46) and the second positioning portion (88, 88a) is a recess.

2. The fluid pressure device (14, 14A, 14B) according to claim 1, wherein
the locking protrusion (68, 68a to 68d) is provided on each of the pair of arm portions (78, 78a, 78b).

3. The fluid pressure device (14, 14A, 14B) according to claim 1 or 2, wherein
the locking protrusion (68, 68a to 68d) extends in a direction in which the pair of arm portions (78, 78a, 78b) extend.

4. The fluid pressure device (14, 14A, 14B) according to any one of claims 1 to 3, wherein
the locking protrusion (68, 68a to 68d) is located at a distal end portion of at least one of the pair of arm portions (78, 78a, 78b).

5. The fluid pressure device (14, 14A, 14B) according to any one of claims 1 to 4**,** wherein
the holder main body (66, 66a, 66b) is provided with an operation portion (72, 72a, 72b) configured to be held by fingers of a user.

6. The fluid pressure device (14, 14A, 14B) according to claim 5, wherein
the operation portion (72, 72a, 72b) is located on an opposite side of the coupling portion (80, 80a) from the pair of arm portions (78, 78a, 78b), and extends in the width direction of the holder main body (66, 66a, 66b).

7. The fluid pressure device (14, 14A, 14B) according to claim 6, wherein
the holder main body (66, 66a, 66b) is provided in plurality, the plurality of holder main bodies (66, 66a, 66b) being provided to be spaced apart from each other in a direction in which the operation portion (72, 72a, 72b) extends, and
the locking protrusion (68, 68a to 68d) is provided on each of the plurality of holder main bodies (66, 66a, 66b).

8. The fluid pressure device (14, 14A, 14B) according to any one of claims 1 to 7, wherein
the first positioning portion (46) is the recess and the second positioning portion (88) is the protrusion in a circular shape, a distal end portion of which is reduced in diameter in a tapered shape.

9. A fluid pressure device set (12, 12A, 12B) comprising:
the fluid pressure device (14, 14A, 14B) according to any one of the claims 1 to 8; and
a connection member (16, 16a) including a male connector (50, 50a) to be connected to the female connector (18, 18a, 18b).

## Patentansprüche

1. Fluiddruckvorrichtung (14, 14A, 14B), umfassend:
einen weiblichen Verbinder (18, 18a, 18b); und
einen Halter (10, 10A bis 10E), der so konfiguriert ist, dass er die Verbindung zwischen dem weiblichen Verbinder (18, 18a, 18b) und einem männlichen Verbinder (50, 50a) hält,
wobei der weibliche Verbinder (18, 18a, 18b) versehen ist mit:
einem Schlitz (22), in dem der Halter (10, 10A bis 10E) angebracht ist;
einem Einsetzloch (24) mit einem Öffnungsabschnitt (44), der sich zu einer Außenfläche des weiblichen Verbindungsstücks (18, 18a, 18b) öffnet, wobei das Einsetzloch (24) durch den Schlitz (22) verläuft; und
einem Fluidströmungsweg (26), der mit dem Einsetzloch (24) in Verbindung steht, und
der männliche Verbinder (50, 50a) einen vorstehenden Abschnitt (54) aufweist, der so konfiguriert ist, dass er in das Einsetzloch (24) passt,
wobei der Halter (10, 10A bis 10E) umfasst:
einen Halterhauptkörper (66, 66a, 66b) mit einer U-Form und einem Paar Armabschnitte (78, 78a, 78b), die in einer Richtung, in der die Armabschnitte (78, 78a, 78b) voneinander getrennt sind, elastisch verformbar sind; und
einen Verriegelungsvorsprung (68, 68a bis 68d), der an mindestens einem der beiden Armabschnitte (78, 78a, 78b) vorgesehen ist und so konfiguriert ist, dass er in einem Zustand, in dem der vorstehende Abschnitt (54) in das Einsetzloch (24) eingepasst ist, in eine an einem Außenumfang des vorstehenden Abschnitts (54) ausgebildete Verriegelungsnut (62) eingreift, wodurch verhindert wird, dass der vorstehende Abschnitt (54) aus dem Einsetzloch (24) herauskommt,
wobei der Verriegelungsvorsprung (68, 68a bis 68d) eine Oberfläche aufweist, die in einem Zustand, in dem der Halter (10, 10A bis 10E) in dem Schlitz (22) montiert ist, zu dem Öffnungsabschnitt (44) hin ausgerichtet ist, und die Oberfläche mit einer geneigten Fläche versehen ist (82, 82a bis 82c) versehen ist, die so geneigt ist, dass eine Dicke des Verriegelungsvorsprungs (68, 68a bis 68d) in einer Breitenrichtung des Halterhauptkörpers (66, 66a, 66b) nach innen abnimmt,
wobei die Dicke des Verriegelungsvorsprungs (68, 68a bis 68d) eine Abmessung des Verriegelungsvorsprungs (68, 68a bis 68d) in einer Richtung ist, in der der vorstehende Abschnitt (54) in das Einsetzloch (24) in einem Zustand eingepasst ist, in dem der Halter (10, 10A bis 10E) in dem Schlitz (22) montiert ist,
wobei der Halterhauptkörper (66, 66a, 66b) einen Kupplungsabschnitt (80, 80a) umfasst, der so konfiguriert ist, dass er das Paar Armabschnitte (78, 78a, 78b) miteinander koppelt,
**dadurch gekennzeichnet, dass** der Kupplungsabschnitt (80, 80a) einen Positionierungsbasisabschnitt (70) umfasst, der von einer Innenfläche des Kupplungsabschnitts in Richtung eines Raums zwischen dem Paar Armabschnitten vorsteht (78, 78a, 78b) vorsteht,
wobei der Positionierungsbasisabschnitt (70) einen zweiten Positionierungsabschnitt (88, 88a) umfasst, der so konfiguriert ist, dass er mit einem ersten Positionierungsabschnitt (46) des weiblichen Verbinders (18, 18a, 18b) in Eingriff kommt, und
wobei einer der ersten Positionierungsabschnitte (46) und der zweiten Positionierungsabschnitte (88, 88a) ein Vorsprung ist und der andere der ersten Positionierungsabschnitte (46) und der zweiten Positionierungsabschnitte (88, 88a) eine Aussparung ist.

2. Fluiddruckvorrichtung (14, 14A, 14B) nach Anspruch 1, wobei der Verriegelungsvorsprung (68, 68a bis 68d) an jedem der beiden Armabschnitte (78, 78a, 78b) vorgesehen ist.

3. Fluiddruckvorrichtung (14, 14A, 14B) nach Anspruch 1 oder 2, wobei sich der Verriegelungsvorsprung (68, 68a bis 68d) in einer Richtung erstreckt, in der sich das Paar Armabschnitte (78, 78a, 78b) erstreckt.

4. Fluiddruckvorrichtung (14, 14A, 14B) nach einem der Ansprüche 1 bis 3, wobei der Verriegelungsvorsprung (68, 68a bis 68d) an einem distalen Endabschnitt mindestens eines der beiden Armabschnitte (78, 78a, 78b) angeordnet ist.

5. Fluiddruckvorrichtung (14, 14A, 14B) nach einem der Ansprüche 1 bis 4, wobei der Halterhauptkörper (66, 66a, 66b) mit einem Betätigungsabschnitt (72, 72a, 72b) versehen ist, der so konfiguriert ist, dass er von den Fingern eines Benutzers gehalten werden kann.

6. Fluiddruckvorrichtung (14, 14A, 14B) nach Anspruch 5, wobei der Betätigungsabschnitt (72, 72a, 72b) auf einer dem Paar Armabschnitte (78, 78a, 78b) gegenüberliegenden Seite des Kupplungsabschnitts (80, 80a) angeordnet ist und sich in Breitenrichtung des Halterhauptkörpers (66, 66a, 66b) erstreckt.

7. Fluiddruckvorrichtung (14, 14A, 14B) gemäß Anspruch 6, wobei
der Halterhauptkörper (66, 66a, 66b) mehrfach vorgesehen ist, wobei die mehreren Halterhauptkörper (66, 66a, 66b) so vorgesehen sind, dass sie in einer Richtung, in der sich der Betätigungsabschnitt (72, 72a, 72b) erstreckt, voneinander beabstandet sind, und
der Verriegelungsvorsprung (68, 68a bis 68d) an jedem der mehreren Halterhauptkörper (66, 66a, 66b) vorgesehen ist.

8. Fluiddruckvorrichtung (14, 14A, 14B) nach einem der Ansprüche 1 bis 7, wobei der erste Positionierungsabschnitt (46) die Aussparung ist und der zweite Positionierungsabschnitt (88) der Vorsprung in einer kreisförmigen Form ist, wobei ein distaler Endabschnitt davon in einem konischen Form verjüngt ist.

9. Fluiddruckvorrichtungsset (12, 12A, 12B), umfassend:
die Fluiddruckvorrichtung (14, 14A, 14B) gemäß einem der Ansprüche 1 bis 8; und
ein Verbindungselement (16, 16a) mit einem männlichen Verbinder (50, 50a) zur Verbindung mit dem weiblichen Verbinder (18, 18a, 18b).

## Revendications

1. Dispositif de pression de fluide (14, 14A, 14B), comprenant :
un connecteur femelle (18, 18a, 18b) ; et
un support (10, 10A à 10E) configuré pour maintenir la connexion entre le connecteur femelle (18, 18a, 18b) et un connecteur mâle (50, 50a),
dans lequel le connecteur femelle (18, 18a, 18b) est doté de :
une fente (22) dans laquelle est monté le support (10, 10A à 10E) ;
un trou d'ajustement (24) incluant une portion d'ouverture (44) s'ouvrant sur une surface extérieure du connecteur femelle (18, 18a, 18b), le trou d'ajustement (24) traversant la fente (22) ; et
un trajet d'écoulement de fluide (26) communiquant avec le trou d'ajustement (24), et
le connecteur mâle (50, 50a) inclut une section faisant saillie (54) configurée pour être ajustée dans le trou d'ajustement (24),
le support (10, 10A à 10E) comprend :
un corps principal de support (66, 66a, 66b) présentant une forme en U et incluant une paire de portions de bras (78, 78a, 78b) élastiquement déformables dans une direction dans laquelle les portions de bras (78, 78a, 78b) sont séparées les unes des autres ; et
une saillie de verrouillage (68, 68a à 68d) disposée sur l'une au moins de la paire de portions de bras (78, 78a, 78b) et configurée pour pénétrer dans une rainure de verrouillage (62) formée sur une périphérie extérieure de la section faisant saillie (54), dans un état dans lequel la section faisant saillie (54) est ajustée dans le trou d'ajustement (24), empêchant ainsi la section faisant saillie (54) de sortir du trou d'ajustement (24),
dans lequel la saillie de verrouillage (68, 68a à 68d) inclut une surface orientée vers la portion d'ouverture (44) dans un état dans lequel le support (10, 10A à 10E) est monté dans la fente (22), et la surface est dotée d'une surface inclinée (82, 82a à 82c) inclinée de telle façon qu'une épaisseur de la saillie de verrouillage (68, 68a à 68d) diminue vers l'intérieur dans une direction de largeur du corps principal de support (66, 66a, 66b),
l'épaisseur de la saillie de verrouillage (68, 68a à 68d) est une dimension de la saillie de verrouillage (68, 68a à 68d) dans une direction dans laquelle la section faisant saillie (54) est ajustée dans le trou d'ajustement (24) dans un état dans lequel le support (10, 10A à 10E) est monté dans la fente (22),
le corps principal de support (66, 66a, 66b) inclut une portion d'accouplement (80, 80a) configurée pour accoupler la paire de portions de bras (78, 78a, 78b) entre elles,
**caractérisé en ce que**
la portion d'accouplement (80, 80a) inclut une portion de base de positionnement (70) faisant saillie à partir d'une surface intérieure de la portion d'accouplement vers un espace entre la paire de portions de bras (78, 78a, 78b),
la portion de base de positionnement (70) inclut une deuxième portion de positionnement (88, 88a) configurée pour s'engager avec une première portion de positionnement (46) du connecteur femelle (18, 18a, 18b), et
l'une parmi la première portion de positionnement (46) et la deuxième portion de positionnement (88, 88a) est une saillie et l'autre parmi la première portion de positionnement (46) et la deuxième portion de positionnement (88, 88a) est un creux.

2. Dispositif de pression de fluide (14, 14A, 14B) selon la revendication 1, dans lequel
la saillie de verrouillage (68, 68a à 68d) est disposée sur chacune parmi la paire de portions de bras (78, 78a, 78b).

3. Dispositif de pression de fluide (14, 14A, 14B) selon la revendication 1 ou 2, dans lequel
la saillie de verrouillage (68, 68a à 68d) s'étend dans une direction dans laquelle la paire de portions de bras (78, 78a, 78b) s'étend.

4. Dispositif de pression de fluide (14, 14A, 14B) selon l'une quelconque des revendications 1 à 3, dans lequel
la saillie de verrouillage (68, 68a à 68d) se trouve au niveau d'une portion d'extrémité distale de l'une au moins parmi la paire de portions de bras (78, 78a, 78b).

5. Dispositif de pression de fluide (14, 14A, 14B) selon l'une quelconque des revendications 1 à 4, dans lequel
le corps principal de support (66, 66a, 66b) est doté d'une portion de commande (72, 72a, 72b) configurée pour être tenue par les doigts d'un utilisateur.

6. Dispositif de pression de fluide (14, 14A, 14B) selon la revendication 5, dans lequel
la portion de commande (72, 72a, 72b) se trouve sur un côté opposé de la portion d'accouplement (80, 80a) par rapport à la paire de portions de bras (78, 78a, 78b), et s'étend dans la direction de largeur du corps principal de support (66, 66a, 66b).

7. Dispositif de pression de fluide (14, 14A, 14B) selon la revendication 6, dans lequel
le corps principal de support (66, 66a, 66b) est fourni en pluralité, la pluralité de corps principaux de support (66, 66a, 66b) étant disposés de manière à être espacés les uns des autres dans une direction dans laquelle la portion de commande (72, 72a, 72b) s'étend, et
la saillie de verrouillage (68, 68a à 68d) est disposée sur chacun parmi la pluralité de corps principaux de support (66, 66a, 66b).

8. Dispositif de pression de fluide (14, 14A, 14B) selon l'une quelconque des revendications 1 à 7, dans lequel
la première portion de positionnement (46) est le creux et la deuxième portion de positionnement (88) est la saillie en une forme circulaire, dont une portion d'extrémité est réduite en diamètre en une forme conique.

9. Ensemble de dispositif de pression de fluide (12, 12A, 12B) comprenant :
le dispositif de pression de fluide (14, 14A, 14B) selon l'une quelconque des revendications 1 à 8 ; et
un élément de connexion (16, 16a) incluant un connecteur mâle (50, 50a) destiné à être connecté au connecteur femelle (18, 18a, 18b).
